# EUROPÄISCHE PATENTANMELDUNG

(11) **EP 4 513 154 A1**
(43) Veröffentlichungstag der Anmeldung: **26.02.2025**
(21) Anmeldenummer: 23193512.3
(22) Anmeldetag: 25.08.2023
(51) Int. Cl.: G01J 3/02, G01J 3/28, G01J 3/44, G01N 21/64, G01N 21/27

(54) **ANALYSESYSTEM ZUM ANALYSIEREN EINER PROBE UND VERFAHREN ZUM KALIBRIEREN**

(71) Anmelder: Leibniz-Institut für Astrophysik Potsdam (AIP), 14482 Potsdam, Brandenburg (DE); Dähne Labortechnik, 12555 Berlin (DE); Surflay Nanotec GmbH, 12489 Berlin (DE)
(72) Erfinder: Dähne, Lars, Hoppegarten (DE); Schmälzlin, Elmar, Potsdam (DE); Dähne, Götz, Berlin (DE)
(74) Vertreter: Braeuning Schubert Patentanwälte GbR

(57) **Zusammenfassung**

Die Erfindung betrifft ein Analysesystem zum Analysieren einer Probe, wobei das Analysesystem eine Einkopplungsanordnung, eine Lichtleitanordnung und eine Auskopplungsfaser aufweist, wobei die Auskopplungsfaser einen Kern und einen Mantel aufweist, wobei der Kern im Vergleich zum Mantel einen höheren Brechungsindex aufweist. Dadurch erübrigt sich die Verwendung eines Spalts, wodurch die Lichttransmission deutlich erhöht wird.

## Beschreibung

Die Erfindung betrifft ein Analysesystem zum Analysieren einer Probe und ein Verfahren zum Kalibrieren eines Spektrometers.

Analysesysteme können verwendet werden, um unterschiedliche Eigenschaften einer Probe zu erfassen. Beispielsweise kann es sich um ein Whispering-Gallery-Mode-Analysesystem handeln, welches den Effekt ausnutzt, dass beim Aufbringen bestimmter Substanzen auf Körper, beispielsweise zirkulare Körper, eine Änderung in Bezug auf sich im Körper ausbildende Resonanzmoden auftritt. Dies kann beispielsweise verwendet werden, um biologische Substanzen zu analysieren oder nachzuweisen.

Es ist eine Aufgabe der Erfindung, ein Analysesystem bereitzustellen, welches im Vergleich zu bekannten Ausführungen alternativ oder besser ausgeführt ist. Außerdem ist es eine Aufgabe der Erfindung, ein Verfahren zum Kalibrieren eines Spektrometers bereitzustellen, das im Vergleich zu bekannten Ausführungen alternativ oder besser ausgeführt ist. Dies wird erfindungsgemäß durch ein Analysesystem und ein Verfahren gemäß den jeweiligen Hauptansprüchen erreicht. Vorteilhafte Ausgestaltungen können beispielsweise den jeweiligen Unteransprüchen entnommen werden.

Die Erfindung betrifft ein Analysesystem zum Analysieren einer Probe. Das Analysesystem weist eine Einkopplungsanordnung, eine Lichtleitanordnung und eine Auskopplungsfaser auf. Die Einkopplungsanordnung ist zum Einkoppeln eines Anregungslichts und zum Richten des Anregungslichts auf die Lichtleitanordnung ausgebildet. Die Lichtleitanordnung ist dazu ausgebildet, das Anregungslicht auf die Probe zu richten, sowie Probenlicht von der Probe zu empfangen und auf die Auskopplungsfaser zu richten. Die Auskopplungsfaser weist bevorzugt im Querschnitt einen Kern und einen Mantel auf, wobei der Kern einen im Vergleich zum Mantel höheren Brechungsindex aufweist. Die Auskopplungsfaser ist dazu ausgebildet, das Probenlicht einem Spektrometer zuzuführen.

Mittels eines solchen Analysesystems lässt sich ein vorteilhaftes Leiten von Licht zu einem Spektrometer erreichen, da sich die erwähnte Auskopplungsfaser mit Kern als vorteilhaft im Vergleich zur alternativen Verwendung eines Spalts herausgestellt hat. Insbesondere erfüllt der erwähnte Kern die gleiche Funktion, wie der Spalt, sorgt jedoch für eine höhere Lichttransmission zum Spektrometer.

Es sei jedoch verstanden, dass grundsätzlich das Analysesystem auch ohne die genannte Auskopplungsfaser realisiert werden kann. Insbesondere kann das Licht im freien Raum, beispielsweise über Linsensysteme, zum Spektrometer geführt werden. Dies wird auch als Freistrahl bezeichnet. In diesem Fall kann beispielsweise ein Spalt vor einem Spektrometer verwendet werden.

Unter einem Analysesystem wird insbesondere ein System verstanden, welches optische Messungen an einer Probe vornehmen kann. Es kann somit auch von einem System zum Analysieren gesprochen werden. Bei einer Probe kann es sich dabei beispielsweise um einen oder mehrere Körper handeln, in welchen sich je nach Vorhandensein einer sich außen anlagernden Substanz unterschiedliche interne Moden ausbilden können. Alternativ oder zusätzlich kann es sich bei der Probe auch um eine Halterung für derartige Körper handeln. Bei der Einkopplungsanordnung handelt es sich insbesondere um eine Anordnung, welches Anregungslicht in das Analysesystem einkoppelt und damit zur Anregung am Ort der Probe nutzbar macht. Die Lichtleitanordnung leitet dieses Licht auf die Probe, wobei die Lichtleitanordnung auch dazu verwendet werden kann, den Ort zu bestimmen, an welchem das Licht auftreffen soll. Hierauf wird weiter unten näher eingegangen. Die Auskopplungsfaser dient dazu, das Licht zu einem Spektrometer zu leiten. Mittels eines Spektrometers kann typischerweise erfasst werden, welche Wellenlängen im Probenlicht vorhanden sind und welche Intensität diese jeweils haben. Es sei verstanden, dass Probe und Spektrometer sowie eine eventuelle Anregungslichtquelle nicht Bestandteil des Analysesystems in seiner allgemeinsten Form sind. Sie können jedoch auch Bestandteil des Analysesystems sein, worauf weiter unten näher eingegangen wird.

Bei dem Anregungslicht handelt es sich typischerweise um dasjenige Licht, welches in der Probe resonante Moden erzeugt oder anderweitige optische Effekte auslöst. Bei dem Probenlicht handelt es sich typischerweise um dasjenige Licht, welches von der Probe abgestrahlt wird, wobei es sich typischerweise um neu erzeugtes und damit von der Probe emittiertes Licht handeln kann. Beispielsweise kann es sich um Fluoreszenzlicht handeln. Das Richten des Probenlichts auf die Auskopplungsfaser kann entweder direkt erfolgen, oder es kann über Zwischenkomponenten erfolgen, wobei auf derartige Ausführungen weiter unten eingegangen wird. Durch das Verwenden eines Kerns mit im Vergleich zum Mantel höherem Brechungsindex wird erreicht, dass der Kern innerhalb der Auskopplungsfaser eine eigenständige lichtleitende Einheit bildet, an dessen Grenzen sich Totalreflektion ausbildet. Somit dient der Kern zum Einsammeln von in die Auskopplungsfaser geleitetem Licht, wodurch eine ähnliche Wirkung wie bei einem Spalt erzeugt wird. Im Unterschied zum Spalt gelangt jedoch bei der Verwendung einer hierin beschriebenen Faser deutlich mehr Licht zum Spektrometer, was beispielsweise die Auflösung oder die Nachweisgrenze deutlich verbessern kann.

Insbesondere kann der Brechungsindex im Kern um mindestens 5 % höher sein als derjenige des Mantels. Insbesondere kann der Kern einen Brechungsindex zwischen 1,5 und 1,6 haben. Insbesondere kann der Mantel einen Brechungsindex zwischen 1,3 und 1,4 haben. Mantel und/oder Kern können beispielsweise aus Glas oder aus Kunststoff ausgebildet sein.

Insbesondere kann der Kern im Querschnitt rechteckförmig sein. Dadurch kann der Kern eine ähnliche Funktionalität wahrnehmen, wie ein Spalt. Insbesondere ist auch ein Spalt typischerweise im Querschnitt rechteckförmig, gegebenenfalls mit offenen Kanten an den kurzen Seiten. Die Verwendung eines im Querschnitt rechteckförmigen Kerns kann dadurch ähnliche optische Wirkungen hervorrufen wie die Verwendung eines Spalts.

Insbesondere kann der Kern im Querschnitt eine kurze Seitenlänge von mindestens 10 µm und/oder von höchstens 20 µm aufweisen. Insbesondere kann der Kern im Querschnitt eine lange Seitenlänge von mindestens 80 µm und/oder von höchstens 2.500 µm aufweisen. Alternativ können beispielsweise auch Werte von 120 µm, 250 µm, 500 µm, 1 mm oder 2 mm als Höchstwert betrachtet werden. Derartige Dimensionen haben sich für typische Anwendungen als vorteilhaft herausgestellt. Insbesondere kann bei solchen Dimensionen eine ähnliche optische Wirkung wie bei einem Spalt erreicht werden, wobei grundsätzlich auch andere Dimensionen verwendet werden können.

Insbesondere kann vorgesehen sein, dass das Analysesystem keinen Spalt im Strahlengang aufweist. Insbesondere kann vorgesehen sein, dass das Analysesystem keinen Spalt zwischen Lichtleitanordnung und Spektrometer aufweist. Durch den Verzicht auf einen Spalt kann die so zum Spektrometer gelangende Lichtintensität deutlich erhöht werden. Es hat sich gezeigt, dass bei Verwendung einer hierin beschriebenen Faser auf einen Spalt verzichtet werden kann, ohne dass dies die optischen Eigenschaften verschlechtert. Unter einem Spalt wird dabei typischerweise ein schmaler Lichtdurchgang verstanden, welcher beidseitig durch vorzugsweise zueinander parallele Begrenzungslinien begrenzt ist.

Insbesondere kann die Lichtleitanordnung als Bündel aus mehreren Einzelfasern ausgebildet sein. Diese können insbesondere zumindest im Wesentlichen parallel zueinander verlaufen. Sie können auch vollständig parallel zueinander verlaufen. Eine derartige Ausführung aus mehreren Einzelfasern kann insbesondere dazu führen, dass durch die Wahl des Orts der Einkopplung von Anregungslicht in die Lichtleitanordnung auch derjenige Ort bestimmt werden kann, an welchem das Licht aus der Lichtleitanordnung wieder austritt und/oder derjenige Ort bestimmt werden kann, an welchem es auf die Probe auftrifft.

Insbesondere können mindestens 5.000 Einzelfasern oder mindestens 10.000 Einzelfasern verwendet werden. Insbesondere können höchstens 20.000 Einzelfasern verwendet werden. Derartige Werte haben sich für typische Anwendungen als vorteilhaft erwiesen, jedoch können auch andere Werte verwendet werden.

Insbesondere kann die Lichtleitanordnung ein erstes Ende und ein zweites Ende aufweisen. Das erste Ende kann auf Seiten der Einkopplungsanordnung angeordnet sein. Das zweite Ende kann probenseitig angeordnet sein. Insbesondere kann das Analysesystem eine Verstelleinrichtung aufweisen, um das erste Ende der Lichtleitanordnung relativ zur Einkopplungsanordnung zu positionieren, sodass je nach Position des ersten Endes das Anregungslicht an einer anderen Stelle auf die Lichtleitanordnung trifft. Dadurch kann durch eine geeignete Positionierung des ersten Endes ausgewählt werden, an welcher Stelle das Anregungslicht auf die Lichtleitanordnung trifft. Bei der Verstelleinrichtung kann es sich insbesondere um einen x-y-Versteller handeln, also insbesondere um einen zweidimensionalen Versteller. Typischerweise kann dadurch ausgewählt werden, welche der mehreren Einzelfasern der Lichtleitanordnung beleuchtet werden. Andere Einzelfasern werden dann nicht beleuchtet und transportieren somit kein Licht zum zweiten Ende. Abhängig davon, welche Einzelfasern beleuchtet werden, tritt das Licht dann am zweiten Ende auch an einer anderen Stelle aus und trifft somit auch in einer anderen Stelle auf die Probe. Dies ermöglicht ein einfaches Auswählen derjenigen Position, an welchem das Anregungslicht auf die Probe trifft.

Insbesondere kann vorgesehen sein, dass das zweite Ende der Lichtleitanordnung relativ zur Probe fest positioniert ist. An dieser Stelle wird typischerweise keine Positionierbarkeit erforderlich sein, da der Ort, an welchem das Licht auf die Probe trifft, mittels Verstellung des ersten Endes erreicht werden kann. Die feste Positionierung des zweiten Endes ermöglicht somit eine einfachere Ausführung. Alternativ ist auch eine bewegliche Befestigung des zweiten Endes möglich, beispielsweise mittels eines x-y-Verstellers.

Insbesondere kann das Analysesystem eine oder mehrere Linsen zum Fokussieren des Anregungslichts auf die Lichtleitanordnung aufweisen. Dadurch kann das Anregungslicht so fokussiert werden, dass es nur einen Teil der Einzelfasern der Lichtleitanordnung trifft, insbesondere wenn die Lichtleitanordnung entsprechend ausgebildet ist.

Insbesondere kann die Lichtleitanordnung ganz oder teilweise biegeweich ausgebildet sein. Dadurch wird eine einfach handhabbare und flexible Struktur erreicht. Insbesondere ist es damit auch möglich, das erste Ende, wie bereits oben beschrieben, frei positionierbar auszuführen, sodass auf diese Weise die weiter oben beschriebene Funktionalität realisiert werden kann.

Insbesondere kann das Analysesystem ein Whispering-Gallery-Mode-Analysesystem sein. Dies kann insbesondere bedeuten, dass kleine Körper, beispielsweise Kugeln oder Zylinder, als Probe vorgesehen sind, auf welchen sich Substanzen ablagern können und in welchen sich abhängig von der Anlagerung derartiger Substanzen unterschiedliche Moden ausbilden.

Insbesondere kann die Probe eine Aufnahme für mehrere Probenkörper aufweisen und/oder kann mehrere Probenkörper aufweisen. Es kann dann insbesondere von einem Multiplex-Analysesystem gesprochen werden. Die Probenkörper können insbesondere unterschiedlich funktionalisiert sein und/oder dazu ausgebildet sein, verschiedene Parameter, beispielsweise Serumbestandteile, parallel zu messen. Die Probenkörper können insbesondere in einem Array angeordnet sein. Sie können zeitgleich messbar sein oder können nacheinander abgescannt werden. Derartige Probenkörper können beispielsweise aus Glas oder Kunststoff oder aus einem sonstigen transparenten Material ausgeführt sein. Insbesondere können mehrere Probenkörper unterschiedlicher Größe vorhanden sein, sodass eine bessere Auswertung möglich ist. Insbesondere können diese unterschiedlich großen Probenkörper mittels der bereits oben beschriebenen Vorgehensweise gezielt angesteuert werden.

Die Einkopplungsanordnung kann insbesondere als teiltransparenter oder dichroitischer Spiegel ausgebildet sein. Dies erlaubt eine Einkopplung des Anregungslichts von einer Seite und ein Weiterleiten von Probenlicht, welches von der Lichtleitanordnung austritt, zu weiteren Komponenten, insbesondere wie nachfolgend beschrieben. Ein dichroitischer Spiegel kann beispielsweise derart ausgebildet sein, dass bei einer Ausrichtung von 45° im Vergleich zu einfallendem Licht Wellenlängen unter 410 nm im Wesentlichen reflektiert werden und Wellenlängen ab 410 nm im Wesentlichen transmittiert werden.

Insbesondere kann das Probenlicht von der Lichtleitanordnung durch die Einkopplungsanordnung zur Auskopplungsfaser gerichtet werden. Dies erlaubt einen kompakten Aufbau, wobei die Einkopplungsanordnung von einer Seite das Anregungslicht empfängt und auf die Lichtleitanordnung richtet und gleichzeitig das Probenlicht zur Auskopplungsfaser hindurchlässt.

Insbesondere kann das Analysesystem eine Auskopplungsanordnung aufweisen, wobei das Probenlicht von der Lichtleitanordnung auf die Auskopplungsanordnung gerichtet wird, und wobei das Probenlicht von der Auskopplungsanordnung auf die Auskopplungsfaser gerichtet wird. Insbesondere kann das Probenlicht von der Lichtleitanordnung zunächst auf ein Einkopplungsanordnung treffen, von dieser zumindest teilweise durchgelassen werden und dann auf die Auskopplungsanordnung treffen, welche dann zumindest teilweise für eine Weiterleitung zur Auskopplungsfaser sorgt. Insbesondere kann die Auskopplungsanordnung als teiltransparenter oder dichroitischer Spiegel ausgebildet sein. Beispielsweise können eine Reflexion von etwa 90 % und eine Transmission von etwa 10 % vorgesehen sein.

Das Analysesystem kann insbesondere eine Kamera aufweisen. Die Auskopplungsanordnung kann insbesondere dazu ausgebildet sein, das Probenlicht teilweise auf die Auskopplungsfaser und teilweise auf die Kamera zu leiten. Mittels einer solchen Ausführung kann parallel zur Auswertung des Probenlichts mittels des Spektrometers auch eine direkte Beobachtung des Probenlichts und des Probenkörpers mittels einer Kamera erfolgen.

Das Analysesystem kann insbesondere eine Anregungslichtquelle zum Aussenden von Anregungslicht auf die Einkopplungsanordnung aufweisen. Insbesondere kann es sich dabei um eine Laseranordnung zum Aussenden eines Laserstrahls handeln. Die Einkopplungsanordnung sorgt dann für die bereits beschriebene Funktionalität.

Insbesondere kann das Analysesystem ein Spektrometer aufweisen. Diesem Spektrometer kann die Auskopplungsfaser das Probenlicht zuführen. Ein Spektrometer kann insbesondere ein Gitter zur Aufspaltung des Probenlichts in einer ersten Richtung und/oder ein Etalon zum Aufspalten des Probenlichts in einer zur ersten Richtung unterschiedlichen oder querstehenden zweiten Richtung aufweisen. Mittels eines Gitters kann zunächst eine spektrale Aufspaltung erreicht werden. Dies kann beispielsweise von einem Detektor in Form eines Zeilendetektors erkannt werden. Durch die zusätzliche Verwendung eines Etalons kann auch eine Aufspaltung quer dazu erreicht werden, wobei in diesem Fall insbesondere durch die Verwendung eines zweidimensionalen Detektors die Auflösung noch einmal deutlich erhöht werden kann. Dies kann zu einer deutlich verbesserten Auswertung führen.

Das Spektrometer kann auch als eigenständiger Erfindungsaspekt verstanden werden, insbesondere in Zusammenhang mit der hier beschriebenen Auskopplungsfaser. Dies kann beispielsweise als Zubehörteil mit einem ansonsten beliebigen Mikroskop verwendet werden. Ein solches Mikroskop kann beispielsweise einen zweiachsigen oder dreiachsigen Verstelltisch aufweisen, um eine Steuerung des Lichts bzw. eine Auswahl zu analysierender Probenkörper vorzunehmen.

Unter einem Etalon wird dabei insbesondere eine präzis planparallele Platte mit Teilverspiegelung verstanden. Abhängig von ihrer Dicke und dem Einfallswinkel des Lichts kommt es bei bestimmten Wellenlängen zu konstruktiver Interferenz, die eine Intensitätsverteilung in der querstehenden Richtung zur Folge hat. Alternativ können auch zwei Platten verwendet werden, die leicht gegeneinander geneigt sind, um in Abhängigkeit von der Position auf dem Etalon nur bestimmte Wellenlängen zu selektieren.

Die Platten können insbesondere parallel zueinander ausgerichtet und angeordnet sein.

Insbesondere kann bei dem verwendeten Spektrometer eine Kombination dispersiver und interferometrischer Elemente verwendet werden. Dispersive Elemente werden beispielsweise verwendet, um das Licht in eine Richtung spektral aufzulösen, wobei typischerweise eine relativ grobe Auflösung von Δλ < 0,5 nm erreicht wird. Senkrecht dazu kann ein Etalon verwendet werden, wodurch die Auflösung auf beispielsweise Δλ < 50 pm erhöht wird. Dieses Konzept einer zweidimensionalen Spektroskopie kann beispielweise in einem Wellenlängenbereich von 350 nm bis 650 nm verwendet werden.

Insbesondere kann, wie bereits oben beschrieben, ein bildgebendes Faserbündel eingesetzt werden, welches wie ein flexibles Endoskop verwendet werden kann. Dadurch können eine Mikroskopeinheit und ein motorisierter Kreuztisch, welche bei einigen Ausführungen gemäß dem Stand der Technik vorhanden sind, durch einfachere und leichtere Komponenten ersetzt werden. Da ein Anregungslichtspot auf der probenfernen Faserstandfläche durch einen einfachen XY-Versteller bewegt werden kann, erlaubt dies eine einfache Ausführung. Die hier daran anschließende Verbindung zum Spektrometer kann vorzugsweise ebenso faseroptisch erfolgen. Durch die Verwendung einer speziellen Faser mit Kern ist kein Eingangsspalt mehr erforderlich. Ein ansonsten beispielsweise verwendeter Linsenspektrograph kann durch einen sehr kompakten hochauflösenden Etalon-Spektrographen bzw. ein entsprechendes Spektrometer ersetzt werden. Das Etalon-Spektrometer kann insbesondere mittels Whispering-Gallery-Modes kalibriert werden.

Insbesondere ergeben sich durch die hierin beschriebenen Vorgehensweisen die Vorteile eines kompakten Aufbaus, da insbesondere auf ein Objektiv mit Fokussiereinheit sowie auf einen Kreuztisch verzichtet werden kann. Die hierin beschriebene Ausführung ist des Weiteren unempfindlich gegen mechanische Einwirkungen, insbesondere da flexible faseroptische Verbindungen realisiert werden. Es wird des Weiteren eine lichtstarke faseroptische Verbindung zum Spektrometer realisiert. Ein separater Spalt, der einen Teil des Lichts abschatten würde, ist nicht mehr erforderlich. Zudem ist ein Etalon-Spektrometer deutlich kleiner als ein LinsenSpektrograph und kann zudem mechanisch stabiler ausgeführt werden.

Insbesondere kann das hierin beschriebene Analysesystem in der Pharmaindustrie für therapeutische Antikörper, für Diagnostik, Lebensmittelüberwachung, Wasseranalytik und/oder für Dünnschichttechnologien verwendet werden. Allgemeiner gesagt, kann das Analysesystem beispielsweise in einer biochemischen Analyse oder in einer medizinischen Diagnostik oder der Umweltanalytik eingesetzt werden.

Die Erfindung betrifft des Weiteren ein Verfahren zum Kalibrieren eines Spektrometers, wobei das Verfahren folgende Schritte aufweist:
- Erzeugen von Moden in mehreren Probenkörpern,
- Aufnehmen von Probenlicht, welches die Probenkörper dabei aussenden,
- Leiten des Probenlichts auf das Spektrometer, und
- Kalibrieren des Spektrometers mittels des Probenlichts.

Es hat sich herausgestellt, dass Probenkörper, in welchen Moden erzeugt werden, eine sehr zuverlässige Referenz für eine Kalibrierung eines Spektrometers liefern, insbesondere im Vergleich zu Gasentladungslampen. Bezüglich der im Rahmen des Verfahrens verwendeten Begriffe und Ausführungen sei auf die Beschreibung des Analysesystems verwiesen, welche entsprechend anwendbar ist.

Insbesondere kann es sich bei den Moden um Whispering-Gallery-Moden handeln. Diese werden weiter unten näher beschrieben werden.

Das Verfahren kann insbesondere mittels eines Analysesystem wie hierin beschrieben ausgeführt werden. Alle erwähnten Ausführungen können dabei angewandt werden. Dabei kann insbesondere ein beschriebenes Spektrometer eines Analysesystems kalibriert werden.

Die Probenkörper können vorzugsweise ganz oder teilweise runde, insbesondere kugelförmige transparente Körper sein. In derartigen kugelförmigen transparenten Körpern können sich die erwähnten Moden vorteilhaft ausbilden. Auch andere Formen als eine runde Form sind jedoch grundsätzlich möglich.

Vorteilhaft können die Probenkörper unterschiedliche Außenabmessungen haben. Dies erlaubt eine Veränderung der Modenanzahl pro Wellenlängenbereich. Der Wellenlängenbereich kann durch die Wahl eines geeigneten Fluoreszenz- oder Phosphoreszenzfarbstoffes variiert werden. Die Kalibrierung wird dadurch erleichtert und verbessert, da der größere spektrale Bereich und der Modenabstand angepasst werden können.

Für analytische Zwecke können beispielsweise Probenkörper verwendet werden, welche als mit einem Fluoreszenzfarbstoff gefärbte Kunststoffmikrokugeln mit Durchmessern von etwa 6 µm bis 12 µm ausgebildet sind. An deren Oberfläche befinden sich beispielsweise Antikörper, an die selektiv bestimmte Substanzen andocken.

Eine Kalibrierung kann insbesondere unter Verwendung einer Anfit-Prozedur bzw. Fit-Prozedur erfolgen. Dabei kann eine parametrisierte Kurve an Messergebnisse angefittet werden, wodurch Parameter der Kurve derart erhalten werden, dass eine Abweichung zwischen dem Messergebnis und der Kurve möglichst gering ist.

Historisch versteht man unter Whispering-Galleries gewölbte Räume, die Schallwellen vielfach reflektieren. Leise Gespräche sind darin typischerweise auch in einiger Entfernung gut zu vernehmen. Übertragen auf Licht kann man Vergleichbares in fluoreszierenden Mikrokugeln beobachten. Die Kugelgrenzfläche wirkt dabei als Spiegel, der Fluoreszenzlicht zu einem gewissen Teil immer wieder ins Innere zurückreflektiert. Für bestimmte Wellenlängen treten Resonanzen auf, die im Fluoreszenz-Emissionsspektrum als schmale Peaks in definierten Abständen sichtbar werden. Spektrale Lage und Anteil der Peaks hängen insbesondere von der Kugelgröße und den Brechungsindizes ab. Lagern sich an funktionalisierten Kugeloberflächen Analyten an, ändert sich die spektrale Lage der Peaks. Aus der spektralen Lageverschiebung lässt sich dann die Analytkonzentration ermitteln.

Beispielhaft sei hierzu auf folgende Literatur verwiesen:
F. Vollmer, S. Arnold, Whispering-gallery-mode biosensing: Label-free detection down to single molecules, Nat. Methods. 5 (2008) 591-596. https://doi.org/10.1038/nmeth.1221.
A. Francois, M. Himmelhaus, Optical sensors based on whispering gallery modes in fluorescent microbeads: Size dependence and influence of substrate, Sensors. 9 (2009) 6836-6852. https://doi.org/10.3390Js90906836.
R. Bischler, M. Olszyna, M. Himmelhaus, L. Dähne, Development of a fully automated in-vitro diagnostics system based on low-Q whispering gallery modes in fluorescent microparticles, Eur. Phys. J. Spec. Top. 223 (2014) 2041-2055. https://doi.org/10.1 140/epjst/e2014-02247-2.

Bei der hierin beschriebenen Ausführung erfolgt die Lichtübertragung zum Spektrometer vorteilhaft über eine spezielle optische Faser. Diese kann insbesondere einen rechteckigen Faserkanal bzw. Kern aufweisen. Dieser kann insbesondere eine Ausdehnung von 16 µm auf 96 µm und/oder innerhalb der oben beschriebenen Grenzen aufweisen. Dies hat insbesondere den Vorteil, dass eine faseroptische Verbindung bei Stößen und Erschütterungen nicht dejustiert wird. Der Aufbau wird damit sehr lichtstark, da sämtliches Licht aus der Faser ohne jegliche Abschattung durch einen separaten Eingangsspalt in das Spektrometer geführt wird. Der rechteckige Kern kann als Pseudospalt verwendet werden. Ein weiterer Spalt im Spektrometer ist nicht mehr erforderlich.

Durch Verwendung eines bildgebenden Faserbündels zur Signalführung zwischen fluoreszierenden Mikrokugeln und Laser bzw. Rechteckkernfaser zum Spektrographen kann jedenfalls erreicht werden, dass eine Dejustage bei Stößen oder Erschütterungen vermieden wird. Außerdem ergibt sich ein sehr kompakter Aufbau. Objektiv und Tubuslinsen werden durch kleine Linsen und faseroptische Kollimatoren ersetzt. Beispielsweise können alle hierin beschriebenen Komponenten eines Analysesystems innerhalb einer Box von etwa 20 cm x 6 cm x 6 cm eingebaut werden. Durch die bildgebenden Eigenschaften des Faserbündels bleibt die Lage der Mikrokugeln sichtbar. Durch Einfügen eines XY-Verstellers kann der Anregungslichtspot zur gewünschten Position auf der Mikrokugel geführt werden. Ein probenseitiger motorisierter Kreuztisch ist nicht mehr erforderlich.

Beispielsweise kann es sich bei der Einkopplungsanordnung in Form eines halbdurchlässigen Spiegels um einen dichroitischen Spiegel handeln. Als Anregungslichtquelle kann beispielsweise ein 405-Nanometer-Diodenlasermodul verwendet werden. Der dichroitische Spiegel reflektiert beispielsweise das violette Anregungslaserlicht in Richtung Faserverbindung zur Probe und lässt das längerwellige Fluoreszenz-Signal passieren. Beispielsweise kann sich in einem unteren Filterwürfel ein teildurchlässiger Spiegel befinden. Beispielsweise können 90 % des Signals zum Kollimator mit Rechteckkernfaser und damit zum Spektrometer gelenkt werden. 10 % können beispielsweise zu einer Kamera gelenkt werden. Um die Position der fluoreszierenden Mikrokugeln gut sichtbar zu machen, kann das Anregungslicht durch einen Farbfilter geblockt werden. Über dem oberen Filterwürfel kann eine Kollimatorlinse angeordnet sein. In deren Kernebene kann sich beispielsweise in einem XY-Versteller die Standfläche eines bildgebenden Faserbündels mit beispielsweise 13.000 Kunststoff-Einzelfasern befinden. Durch Bewegung des XY-Verstellers lässt sich der Anregungslaserspot probenseitig innerhalb eines Bildfelds mit beispielsweise einem Durchmesser von 1,5 mm auf die gewünschte Position bewegen. Vor der probenseitigen Faserstandfläche befinden sich typischerweise ein oder mehrere Kugellinsen, alternativ eine Kombination aus Kollimator und Linse, die dafür sorgen, dass der Fokus in der Ebene der Mikrokugel liegt und nicht im Boden des Probenträgers.

Whispering-Gallery-Modes können grundsätzlich auch zur Kalibrierung von Spektrometern verwendet werden. Das Auftreten der Peaks auf der Wellenlängenskala ist typischerweise regelmäßig und lässt sich berechnen. Beispielsweise können derartige Whispering-Gallery-Modes für die Kalibrierung von Astronomie-Spektrographen genutzt werden. Insbesondere kann mit Whispering-Gallery-Modes ein Spektrometer mit einem Etalon genau kalibriert werden. Beleuchtet man das Spektrometer mit einem Kontinuum, so ergeben sich auf dem Detektor beispielsweise hunderte schräg nebeneinander verlaufende Signalspuren. Die Emissionslinien von Gasentladungslampen, die man beispielhaft zur Kalibrierung verwendet, erzeugen generell typischerweise nicht auf allen Signalspuren entsprechende Spots. Selbst wenn man mehrere verschiedene Gasentladungslampen gleichzeitig verwendet, bleibt die Zahl der Spots und damit der Stützstellen für eine Kalibrierung gering. In etlichen Bereichen der Signalspuren wird die zugehörige Wellenlänge vorzugsweise durch reine Interpolation ermittelt. Durch die Nutzung von Whispering-Gallery-Modes ergibt sich der Vorteil, dass der spektrale Abstand der Whispering-Gallery-Modes und der Wellenlängenbereich ihres Auftretens sich durch Kugelgröße und Wahl des Fluoreszenzfarbstoffs beliebig einstellen lassen.

Die genauen absoluten Positionen der Whispering-Gallery-Mode-Peaks lassen sich wie folgt bestimmen:
- Messung der Whispering-Gallery-Mode-Spektren mit einem bereits (beispielsweise mit Gasentladungslampen) kalibrierten Spektrometer,
- Ermittlung der effektiven Kugelgröße und der effektiven Brechungsindexverhältnisse mittels Anfitten,
- Berechnung der tatsächlichen spektralen Lage der Peaks der Whispering-Gallery-Modes mit dem Fit-Ergebnis.

Diese Vorgehensweise wird durch zwei Faktoren unterstützt. Zum einen treten zahlreiche Peaks auf, d.h. es sind viele Stützstellen für den Fit vorhanden. Bei einem bereits mit Gasentladungslampen kalibrierten Spektrometer wird die gemessene Lage der Peaks nicht stark vom tatsächlichen Wert abweichen, d.h. der Fit beginnt bereits mit guten Startwerten, die dem Ergebnis sehr nahe liegen. Man kann über einen Faserkoppler das Spektrum der Berechnung der tatsächlichen spektralen Lage der Peaks der Whispering-Gallery-Modes auch auf zwei Spektrometer aufteilen, z.B. 50 % auf das Etalon-Spektrometer und die anderen 50 % auf ein bereits gut kalibriertes hochauflösendes Referenzspektrometer. In diesem Fall kann man auch auf die Fit-Prozedur verzichten und die Lage der Whispering-Gallery-Mode-Peaks vom Referenzspektrometer ablesen. Mit den Whispering-Gallery-Mode-Peaks lassen sich regelmäßig Spots auf sämtlichen Signalspuren erzeugen, die dann als Stützstellen zur Kalibrierung genutzt werden. Somit wird beim Etalon-Spektrometer erstmals eine durchgehende Kalibrierung sämtlicher Signalspuren möglich.

Weitere Merkmale und Vorteile wird der Fachmann den nachfolgenden mit Bezug auf die beigefügte Zeichnung beschriebenen Ausführungsbeispielen entnehmen. Dabei zeigen:
- Figur 1:: ein Analysesystem,
- Figur 2:: eine Faser mit Kern, und
- Figur 3:: ein Spektrometer.

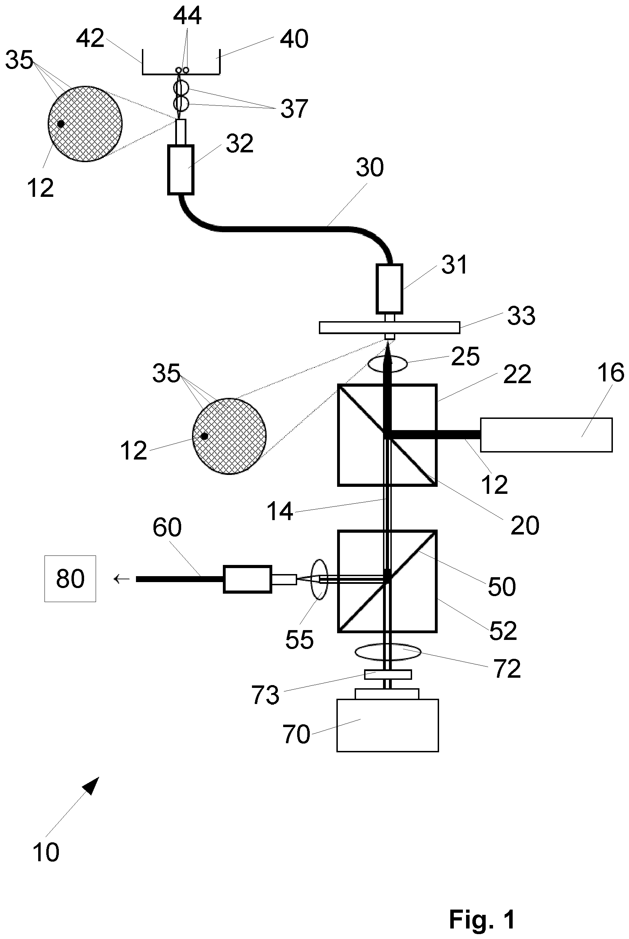

Figur 1 zeigt ein Analysesystem 10 gemäß einem Ausführungsbeispiel der Erfindung. Das Analysesystem 10 weist eine Einkopplungsanordnung 20 auf, welche als dichroitischer Spiegel ausgebildet ist. Diese ist in einem ersten Filterwürfel 22 angeordnet. Der Filterwürfel 22 ist vorliegend ein schwarzes Metallgehäuse, in das die Spiegelplatte eingesetzt wird. Das Analysesystem 10 weist eine Anregungslichtquelle 16 auf, welche als Laser ausgebildet ist und dazu ausgebildet ist, ein Anregungslicht 12 derart zu emittieren, dass es auf die Einkopplungsanordnung 20 trifft.

Das Analysesystem 10 weist eine Lichtleitanordnung 30 auf. Die Lichtleitanordnung 30 weist ein erstes Ende 31 und ein zweites Ende 32 auf. Das erste Ende 31 ist auf der Seite der Einkopplungsanordnung 20 angeordnet. Zwischen der Einkopplungsanordnung 20 und dem ersten Ende 31 der Lichtleitanordnung 30 befindet sich eine Linse 25. Das erste Ende 31 der Lichtleitanordnung 30 ist mittels eines XY-Verstellers 33 in einer Ebene bewegbar, welche quer zur Papierebene von Figur 1 steht.

Das zweite Ende 32 der Lichtleitanordnung 30 ist fest. Die Lichtleitanordnung 30 ist aus mehreren Einzelfasern 35 ausgebildet, welche sich im Wesentlichen parallel zueinander innerhalb der Lichtleitanordnung 30 erstrecken. Durch die Beweglichkeit und die Verwendung des XY-Verstellers 33 ist es möglich, denjenigen Ort auf der Lichtleitanordnung 30 auszuwählen, auf welchen das Anregungslicht 12 auftrifft. Dies ist in Figur 1 in einem Ausschnitt zu sehen, wobei die Einzelfasern 35 gezeigt sind und auch das Anregungslicht 12 eingezeichnet ist, welches in der gezeigten Stellung links von der Mitte und etwa auf halber Höhe auftrifft. Entsprechend tritt das Anregungslicht 12 am zweiten Ende 32 wieder aus, da die Einzelfasern 35 im Wesentlichen unabhängig voneinander das eingekoppelte Licht leiten.

Benachbart zum zweiten Ende 32 der Lichtleitanordnung 30 befindet sich eine Probe 40. Die Probe 40 weist eine Aufnahme 42 in Form einer Probenschale sowie mehrere Probenkörper 44 auf. Die Probenkörper 44 sind als unterschiedlich große Kugeln ausgebildet, in welchen sich stehende Moden ausbilden können, wobei dies abhängig davon ist, ob sich eine gewisse Substanz an der Oberfläche ablagert oder nicht. Zwischen dem zweiten Ende 32 und der Probe 40 befinden sich noch zwei Kugellinsen 37, welche das austretende Anregungslicht 12 auf die Probe 40 leiten. Durch die Verwendung des XY-Verstellers 33 tritt das Anregungslicht 12 an unterschiedlichen Einzelfasern 35 aus, wobei dadurch auch ausgewählt werden kann, an welcher Stelle das Anregungslicht 12 auf die Probe 40 auftrifft. Dies erlaubt das selektive Anregen unterschiedlicher Probenkörper 44.

Wenn die Probe 40 bzw. deren Probenkörper 44 angeregt werden, führt dies zur Fluoreszenz und es bilden sich stehende Moden aus. Im Fluoreszenzspektrum sind diese Moden als schmalbandige Peaks in regelmäßigen Abständen sichtbar. Diese Fluoreszenz bildet ein Probenlicht 14, welches am zweiten Ende 32 der Lichtleitanordnung 30 eingekoppelt wird und entgegengesetzt zur Ausbreitung des Anregungslichts 12 zurückgeführt wird. Das Probenlicht 14 wird wiederum auf die Einkopplungsanordnung 20 gerichtet, welche das Probenlicht 14 durchlässt und zur nachfolgend beschriebenen Auskopplungsanordnung 50 weiterleitet.

Unterhalb des ersten Filterwürfels 22 befindet sich ein zweiter Filterwürfel 52 mit einer Auskopplungsanordnung 50. Die Auskopplungsanordnung 50 ist als teiltransparenter Spiegel ausgebildet. Die Auskopplungsanordnung 50 leitet einen Teil von etwa 90 % des von der Probe 40 zurückkommenden Probenlichts 14 auf eine Sammellinse 55. Der Rest des Probenlichts 14 wird zu einer Kamera 70 durchgelassen, wobei zwischen der Auskopplungsanordnung 50 und der Kamera 70 noch eine Objektivlinse 72 und ein Farbfilter 73 zur Blockung restlichen Anregungslichts angeordnet sind. Die Kamera 70 ermöglicht ein direktes visuelles Beobachten des Probenkörpers und des Probenlichts 14.

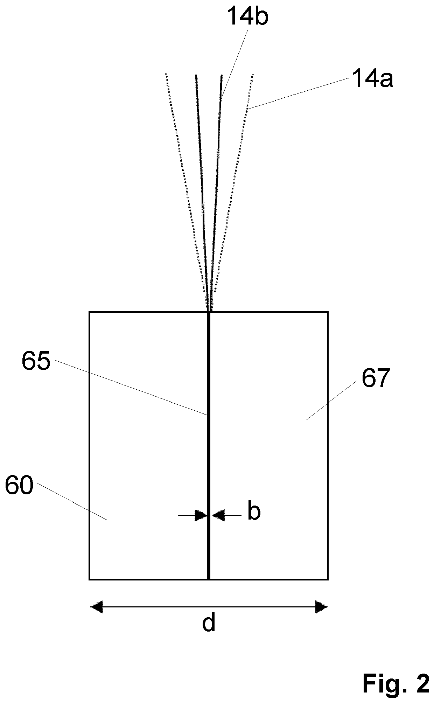

Das Probenlicht 14 gelangt nach der Sammellinse 55 zu einer Auskopplungsfaser 60. Die Auskopplungsfaser 60 ist dafür vorgesehen, das Probenlicht 14 zu einem Spektrometer 80 weiterzuleiten. Dies wird mit Bezug auf Figur 2 näher beschrieben werden.

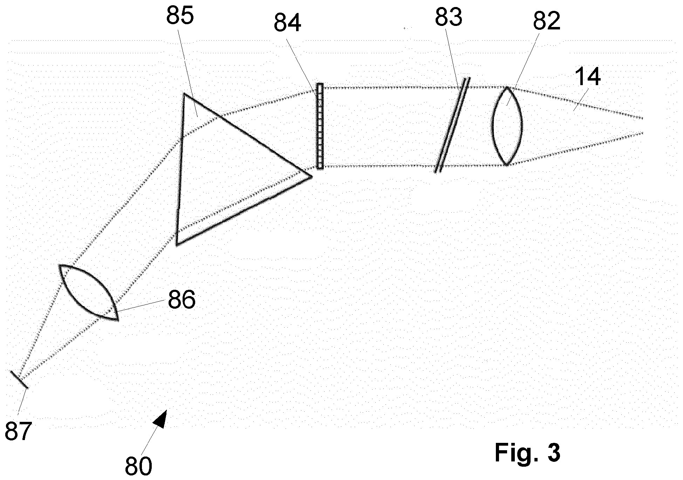

Das Spektrometer 80 ist in Figur 3 detaillierter dargestellt, worauf weiter unten näher eingegangen wird.

Figur 2 zeigt die Auskopplungsfaser 60 entlang ihrer Längserstreckung. Die Auskopplungsfaser 60 weist einen Kern 65 und einen Mantel 67 auf. Der Kern 65 weist dabei einen höheren Brechungsindex auf als der Mantel 67. Die Auskopplungsfaser 60 weist insgesamt einen Durchmesser d von 200 µm auf. Der Kern 65 weist demgegenüber nur eine Breite b von 16 µm auf. Dies führt dazu, dass der Kern 65 die Funktion eines Spalts wahrnimmt, auf welchen somit vorteilhaft verzichtet werden kann.

Obenseitig in Figur 2 sind Begrenzungen eines aus dem Kern 65 austretenden Probenlichts 14 in zwei unterschiedlichen Varianten eingezeichnet. Die erste Variante ist mit Bezugszeichen 14a versehen, wobei dies den typischen Austrittswinkel angibt, mit welchem ein Licht ohne die Verwendung eines Spalts austritt. In diesem Fall wirkt lediglich der Kern 65 in der Funktion eines Spalts. Die zweite Variante ist mit Bezugszeichen 14b bezeichnet und zeigt denjenigen Winkel an, welcher bei Verwendung eines hypothetischen Spalts nutzbar wäre. Es ist ersichtlich, dass sich die beiden Winkel deutlich unterscheiden und bei der hierin beschriebenen Ausführung deutlich mehr Licht zum Spektrometer gelangen kann.

Das Spektrometer 80 weist eine Eingangslinse 82 auf, welche den hereinkommenden Strahl von Probenlicht 14 kollimiert. Das Spektrometer 80 weist ein Etalon 83 auf, welches für eine Aufspaltung in einer Ebene quer zur Papierebene von Figur 3 sorgt. Das Etalon 83 ist eine planparallele Platte, welche zumindest leicht schräg im Vergleich zur Lichtausbreitung angeordnet ist und deshalb für eine entsprechende Aufspaltung sorgt. Das Spektrometer 80 weist ein Gitter 84 auf, welches für eine spektrale Aufspaltung in der Papierebene von Figur 3 sorgt. Diese Aufspaltung kann durch ein Prisma 85 weiter verbessert werden, wobei in alternativen Ausführungen auch auf das Prisma 85 verzichtet werden könnte. Zusätzlich kann eine Zylinderlinse eingefügt werden, die eine optische Verlängerung des Spalts bewirkt und die Aufspaltung durch das Etalon optimiert.

Das derart aufgespaltene Probenlicht 14 wird durch eine weitere Sammellinse 86 auf einen Detektor 87 geleistet. Der Detektor 87 ist vorliegend zweidimensional ausgeführt, so dass er die spektrale Aufspaltung sowohl des Gitters 84 wie auch des Etalons 83 detektieren kann. Dies erlaubt insgesamt eine sehr hohe spektrale Auflösung bis auf eine Größenordnung von etwa 5 pm, so dass im Vergleich zu einer reinen Verwendung eines Gitters 84 die Auflösung deutlich verbessert werden kann.

Der bereits weiter oben erwähnte rechteckige Kern 65 der Auskopplungsfaser 60 kann als Pseudospalt verstanden werden. Dieser sorgt für den auch in Fig. 3 zu sehenden Einfallswinkel des Probenlichts 14 beim Auftreffen auf das Spektrometer 80. Ein weiterer Spalt ist somit typischerweise nicht mehr erforderlich. Wie in Figur 2 bereits ersichtlich ist und auch bereits erläutert wurde, wird dadurch wesentlich mehr Licht zum Spektrometer 80 durchgelassen. Das Licht tritt gemäß einer beispielhaften numerischen Apparatur der Auskopplungsfaser 60 von 0,17 beispielsweise in einem Halbwinkel von 10° aus. Würde ein separater Spalt von 16 µm Breite mit lediglich 50 µm Materialdicke in nur 100 µm Entfernung von der Faserstirnfläche platziert werden, dann würde bereits etwa die Hälfte des aus der Faser austretenden Lichts abgeschattet werden.

Nachfolgend werden gewisse Merkmale strukturiert wiedergegeben. Es handelt sich dabei nicht um die eingereichten Ansprüche der Anmeldung. Die Merkmale können beliebig untereinander und mit anderen hierin offenbarten Merkmalen kombiniert werden. Sie können auch als eigenständige Erfindungsaspekte verstanden werden.
1. Analysesystem (10) zum Analysieren einer Probe (40), wobei das Analysesystem (10) folgendes aufweist:
   eine Einkopplungsanordnung (20),
   eine Lichtleitanordnung (30), und
   eine Auskopplungsfaser (60),
   wobei die Einkopplungsanordnung (20) zum Einkoppeln eines Anregungslichts (12) und zum Richten des Anregungslichts (12) auf die Lichtleitanordnung (30) ausgebildet ist,
   wobei die Lichtleitanordnung (30) dazu ausgebildet ist, das Anregungslicht (12) auf die Probe (40) zu richten, sowie Probenlicht (14) von der Probe (40) zu empfangen und auf die Auskopplungsfaser (60) zu richten,
   wobei die Auskopplungsfaser (60) im Querschnitt einen Kern (65) und einen Mantel (67) aufweist, wobei der Kern (65) einen im Vergleich zum Mantel (67) höheren Brechungsindex aufweist, und
   wobei die Auskopplungsfaser (60) dazu ausgebildet ist, das Probenlicht (14) einem Spektrometer (80) zuzuführen.
2. Analysesystem (10) nach Merkmal 1,
   wobei der Kern (65) im Querschnitt rechteckförmig ist.
3. Analysesystem (10) nach einem der vorhergehenden Merkmale,
   wobei der Kern (65) im Querschnitt eine kurze Seitenlänge von mindestens 10 µm und/oder von höchstens 20 µm aufweist,
      und/oder
   wobei der Kern (65) im Querschnitt eine lange Seitenlänge von mindestens 80 µm und/oder von höchstens 2.500 µm aufweist.
4. Analysesystem (10) nach einem der vorhergehenden Merkmale,
   wobei das Analysesystem (10) keinen Spalt im Strahlengang aufweist,
      und/oder
   wobei das Analysesystem (10) keinen Spalt zwischen Lichtleitanordnung (30) und Spektrometer (80) aufweist.
5. Analysesystem (10) nach einem der vorhergehenden Merkmale,
   wobei die Lichtleitanordnung (30) aus mehreren Einzelfasern (35) ausgebildet ist, welche im Wesentlichen parallel zueinander verlaufen.
6. Analysesystem (10) nach einem der vorhergehenden Merkmale,
   wobei die Lichtleitanordnung (30) ein erstes Ende (31) und ein zweites Ende (32) aufweist, wobei das erste Ende (31) auf Seiten der Einkopplungsanordnung (20) angeordnet ist und das zweite Ende (32) probenseitig angeordnet ist, und wobei das Analysesystem (10) eine Verstelleinrichtung aufweist, um das erste Ende der Lichtleitanordnung (30) relativ zur Einkopplungsanordnung (20) zu positionieren, so dass je nach Position des ersten Endes (31) das Anregungslicht (12) an einer anderen Stelle auf die Lichtleitanordnung (30) trifft.
7. Analysesystem (10) nach Merkmal 6,
   wobei das zweite Ende (32) der Lichtleitanordnung (30) relativ zur Probe (40) fest positioniert ist.
8. Analysesystem (10) nach einem der vorhergehenden Merkmale,
   welches eine Linse (25) zum Fokussieren des Anregungslichts (12) auf die Lichtleitanordnung (30) aufweist.
9. Analysesystem (10) nach einem der vorhergehenden Merkmale,
   wobei die Lichtleitanordnung (30) ganz oder teilweise biegeweich ausgebildet ist.
10. Analysesystem (10) nach einem der vorhergehenden Merkmale,
   wobei das Analysesystem (10) ein Whispering-Gallery-Mode-Analysesystem (10) ist.
11. Analysesystem (10) nach einem der vorhergehenden Merkmale,
   wobei die Probe (40) eine Aufnahme (42) für mehrere Probenkörper (44) aufweist und/oder mehrere Probenkörper (44) aufweist.
12. Analysesystem (10) nach einem der vorhergehenden Merkmale,
   wobei die Einkopplungsanordnung (20) als teiltransparenter oder dichroitischer Spiegel ausgebildet ist.
13. Analysesystem (10) nach einem der vorhergehenden Merkmale,
   wobei das Probenlicht (14) von der Lichtleitanordnung (30) durch die Einkopplungsanordnung (20) zur Auskopplungsfaser (60) gerichtet wird.
14. Analysesystem (10) nach einem der vorhergehenden Merkmale,
   welches eine Auskopplungsanordnung (50) aufweist,
   wobei das Probenlicht (14) von der Lichtleitanordnung (30) auf die Auskopplungsanordnung (50) gerichtet wird, und
   wobei das Probenlicht (14) von der Auskopplungsanordnung (50) auf die Auskopplungsfaser (60) gerichtet wird.
15. Analysesystem (10) nach Merkmal 14,
   wobei die Auskopplungsanordnung (50) als teiltransparenter oder dichroitischer Spiegel ausgebildet ist.
16. Analysesystem (10) nach einem der Merkmale 14 oder 15,
   wobei das Analysesystem (10) eine Kamera (70) aufweist, und
   wobei die Auskopplungsanordnung (50) dazu ausgebildet ist, das Probenlicht (14) teilweise auf die Auskopplungsfaser (60) und teilweise auf die Kamera (70) zu leiten.
17. Analysesystem (10) nach einem der vorhergehenden Merkmale,
   welches eine Anregungslichtquelle (16) zum Aussenden von Anregungslicht (12) auf die Einkopplungsanordnung (20) aufweist.
18. Analysesystem (10) nach einem der vorhergehenden Merkmale,
   welches ein Spektrometer (80) aufweist, auf welches die Auskopplungsfaser (60) das Probenlicht (14) richtet.
19. Analysesystem (10) nach Merkmal 18,
   wobei das Spektrometer (80) ein Gitter (84) zur Aufspaltung des Probenlichts (14) in einer ersten Richtung und ein Etalon (83) zum Aufspalten des Probenlichts (14) in einer zur ersten Richtung unterschiedlichen oder querstehenden zweiten Richtung aufweist.
20. Verfahren zum Kalibrieren eines Spektrometers (80), wobei das Verfahren folgende Schritte aufweist:
   Erzeugen von Moden in einem Probenkörpern (44), Aufnehmen von Probenlicht (14), welches die Probenkörper (44) dabei aussenden,
   Leiten des Probenlichts (14) auf das Spektrometer (80), und Kalibrieren des Spektrometers (80) mittels des Probenlichts (14).
21. Verfahren nach Merkmal 20,
   welches mittels eines Analysesystems (10) nach einem der der Merkmale 1 bis 19 durchgeführt wird.
22. Verfahren nach einem der Merkmale 20 oder 21,
   wobei die Probenkörper (44) ganz oder teilweise kugelförmige transparente Körper sind.
23. Verfahren nach einem der Merkmale 20 bis 22,
   wobei die Probenkörper (44) unterschiedliche Außenabmessungen haben.

### Bezugszeichenliste

10 - Analysesystem
12 - Anregungslicht
14 - Probenlicht
16 - Anregungslichtquelle
20 - Einkopplungsanordnung
22 - erster Filterwürfel
25 - Linse
30 - Lichtleitanordnung
31 - erstes Ende
32 - zweites Ende
33 - XY-Versteller
35 - Einzelfasern
37 - Kugellinsen
40 - Probe
42 - Aufnahme
44 - Probenkörper
50 - Auskopplungsanordnung
52 - zweiter Filterwürfel
55 - Sammellinse
60 - Auskopplungsfaser
65 - Kern
67 - Mantel
70 - Kamera
72 - Objektivlinse
73 - Farbfilter
80 - Spektrometer
82 - Eingangslinse
83 - Etalon
84 - Gitter
85 - Prisma
86 - Sammellinse
87 - Detektor

## Patentansprüche

1. Analysesystem (10) zum Analysieren einer Probe (40), wobei das Analysesystem (10) folgendes aufweist:
eine Einkopplungsanordnung (20),
eine Lichtleitanordnung (30), und
eine Auskopplungsfaser (60),
wobei die Einkopplungsanordnung (20) zum Einkoppeln eines Anregungslichts (12) und zum Richten des Anregungslichts (12) auf die Lichtleitanordnung (30) ausgebildet ist,
wobei die Lichtleitanordnung (30) dazu ausgebildet ist, das Anregungslicht (12) auf die Probe (40) zu richten, sowie Probenlicht (14) von der Probe (40) zu empfangen und auf die Auskopplungsfaser (60) zu richten,
wobei die Auskopplungsfaser (60) im Querschnitt einen Kern (65) und einen Mantel (67) aufweist, wobei der Kern (65) einen im Vergleich zum Mantel (67) höheren Brechungsindex aufweist, und
wobei die Auskopplungsfaser (60) dazu ausgebildet ist, das Probenlicht (14) einem Spektrometer (80) zuzuführen.

2. Analysesystem (10) nach Anspruch 1,
wobei der Kern (65) im Querschnitt rechteckförmig ist.

3. Analysesystem (10) nach einem der vorhergehenden Ansprüche,
wobei der Kern (65) im Querschnitt eine kurze Seitenlänge von mindestens 10 µm und/oder von höchstens 20 µm aufweist,
und/oder
wobei der Kern (65) im Querschnitt eine lange Seitenlänge von mindestens 80 µm und/oder von höchstens 2.500 µm aufweist.

4. Analysesystem (10) nach einem der vorhergehenden Ansprüche,
wobei das Analysesystem (10) keinen Spalt im Strahlengang aufweist,
und/oder
wobei das Analysesystem (10) keinen Spalt zwischen Lichtleitanordnung (30) und Spektrometer (80) aufweist.

5. Analysesystem (10) nach einem der vorhergehenden Ansprüche,
wobei die Lichtleitanordnung (30) aus mehreren Einzelfasern (35) ausgebildet ist, welche im Wesentlichen parallel zueinander verlaufen.

6. Analysesystem (10) nach einem der vorhergehenden Ansprüche,
wobei die Lichtleitanordnung (30) ein erstes Ende (31) und ein zweites Ende (32) aufweist, wobei das erste Ende (31) auf Seiten der Einkopplungsanordnung (20) angeordnet ist und das zweite Ende (32) probenseitig angeordnet ist, und wobei das Analysesystem (10) eine Verstelleinrichtung aufweist, um das erste Ende der Lichtleitanordnung (30) relativ zur Einkopplungsanordnung (20) zu positionieren, so dass je nach Position des ersten Endes (31) das Anregungslicht (12) an einer anderen Stelle auf die Lichtleitanordnung (30) trifft.

7. Analysesystem (10) nach einem der vorhergehenden Ansprüche,
wobei die Lichtleitanordnung (30) ganz oder teilweise biegeweich ausgebildet ist.

8. Analysesystem (10) nach einem der vorhergehenden Ansprüche,
wobei das Analysesystem (10) ein Whispering-Gallery-Mode-Analysesystem (10) ist.

9. Analysesystem (10) nach einem der vorhergehenden Ansprüche,
wobei die Probe (40) eine Aufnahme (42) für mehrere Probenkörper (44) aufweist und/oder mehrere Probenkörper (44) aufweist.

10. Analysesystem (10) nach einem der vorhergehenden Ansprüche, welches eine Auskopplungsanordnung (50) aufweist,
wobei das Probenlicht (14) von der Lichtleitanordnung (30) auf die Auskopplungsanordnung (50) gerichtet wird, und
wobei das Probenlicht (14) von der Auskopplungsanordnung (50) auf die Auskopplungsfaser (60) gerichtet wird.

11. Analysesystem (10) nach Anspruch 10,
wobei das Analysesystem (10) eine Kamera (70) aufweist, und
wobei die Auskopplungsanordnung (50) dazu ausgebildet ist, das Probenlicht (14) teilweise auf die Auskopplungsfaser (60) und teilweise auf die Kamera (70) zu leiten.

12. Analysesystem (10) nach einem der vorhergehenden Ansprüche, welches ein Spektrometer (80) aufweist, auf welches die Auskopplungsfaser (60) das Probenlicht (14) richtet.

13. Analysesystem (10) nach Anspruch 12,
wobei das Spektrometer (80) ein Gitter (84) zur Aufspaltung des Probenlichts (14) in einer ersten Richtung und ein Etalon (83) zum Aufspalten des Probenlichts (14) in einer zur ersten Richtung unterschiedlichen oder querstehenden zweiten Richtung aufweist.

14. Verfahren zum Kalibrieren eines Spektrometers (80), wobei das Verfahren folgende Schritte aufweist:
Erzeugen von Moden in einem Probenkörpern (44),
Aufnehmen von Probenlicht (14), welches die Probenkörper (44) dabei aussenden,
Leiten des Probenlichts (14) auf das Spektrometer (80), und
Kalibrieren des Spektrometers (80) mittels des Probenlichts (14).

15. Verfahren nach Anspruch 14,
welches mittels eines Analysesystems (10) nach einem der der Ansprüche 1 bis 14 durchgeführt wird.
